Europäisches Patentamt

**European Patent Office**

Office européen des brevets

(11) Publication number : **0 470 034 A2**

## (12) EUROPEAN PATENT APPLICATION

(21) Application number : **91500083.0**

(22) Date of filing : **30.07.91**

(51) Int. Cl.$^5$ : **G01R 31/00,** G08C 25/00, H05B 37/03

(30) Priority : **30.07.90 ES 9002043**

(43) Date of publication of application :
**05.02.92 Bulletin 92/06**

(84) Designated Contracting States :
**AT BE CH DE DK FR GB GR IT LI LU NL SE**

(71) Applicant : **INGENIERIA DE SISTEMAS DE CONTROL S.A.
Cid, 22
E-03800 Alcoy, (Alicante) (ES)**

(72) Inventor : **Esparza Olcina, Rafael
Maestro Espi, 8
Alcoy, Alicante (ES)**

(74) Representative : **Ungria Lopez, Javier et al
Avda. Ramon y Cajal, 78
E-28043 Madrid (ES)**

(54) Information transmission system of the state of loads connected to an electric line.

(57) The purpose is to supervise and demonstrate the state of a plurality of loads (4) connected to an electric line such as for example the lamps of the public lighting lines, machines, etc.

It has a central control unit (1) that is connected to a plurality of sector control units (2), which in turn, each one of them is connected by an electric feed line (9) to a plurality of load control units (2) through which the load (4) is connected, detecting and storing the possible failures.

The information transmission is carried out when there is no feed in the lighting network.

The connection between the load control units (3) and the sector control units (2) can be done through the control line (22), avoiding additional wiring.

EP 0 470 034 A2

FIG-1

OBJECT OF THE INVENTION

As is expressed in the title of this specification, the present invention consists of an information transmission system whose purpose is to supervise and demonstrate the state of a plurality of loads connected to an electric line; such as for example loads of public lighting lines, machines, sensors, etc.

Therefore, the system of the invention is generally applicable for the supervision of the state of any number of remote devices by means of two wires, taking advantage the existing feed wires of the remote devices to transmit information among the different units for the purpose of knowing the state of each one of the loads to be supervised.

In this way an information exchange system is provided without the need to install an auxiliary information network.

BACKGROUND OF THE INVENTION

Conventionally information transmission systems are known in which the information is transmitted through the feed line itself of the remote devices to be controlled; these conventional systems being the following:

1.- Carrier current transmission systems, in which the transmission is done by means of an alternating periodic wave as information support. Upon a basic or carrier wave, a series of modulated frequency or amplitude current pulses which duly filtered is gathered in a receiver is emitted.

This system is used in high and average voltage networks, such as energy distribution lines, electrified railway tracks, etc.

This system needs to transmit at a frequency of several hundred Hertzs to obtain a clear and radioelectric interference line free transmission.

This involves installation of expensive and difficult adjustment equipment to obtain good communication, aside from needing huge equipment which is not easy to install in any place.

2.- Current loop transmission systems by means of which the information is transmitted in a different way, generating an intensity by an emitting element, intensity which runs all the series-connected receivers.

In this system there is a limitation regarding the transmission distance and the number of units placed on the network, given that each element causes a voltage drop. Besides if an element fails the communication to the entire network drops, therefore, it is not possible to detect where the failure is located.

This system needs two pairs of cables to effect a complete communication, one to emit and the other to receive.

Besides, the communication wiring is dedicated exclusively to transmission and the loads to be controlled cannot be fed through it.

3.- Modem transmission system, which consists of codifying the information in the form of variation of a feature of an alternating wave, frequency, amplitude, phase, etc.

This system also needs to include a wiring dedicated to communication, different from the load feed controlled.

Besides all the above cited systems have the inconvenience of needing an outer feed source that supplies the equipment with enough energy to transmit. On the other hand, the cited systems are conceived to transmit a large amount of information therefore they use relatively complicated communication protocols and a line dedicated to communication, just as it has been indicated.

DESCRIPTION OF THE INVENTION

In order to solve the above cited inconveniences, the invention consists of an information transmission system that supervises and demonstrates the state of a plurality of loads connected to the line; and has a central operating control unit of the system which is connected to a plurality of sector control units, which in turn, each one of which is connected, through the load feed electric line to a plurality of load control units, each one of which is connected to one of the loads to be supervised; detecting and storing the possible load operating failures, failures which are transmitted through the electric feed line itself to the corresponding sector control unit and from the latter to the central control unit.

The central control unit is connected to a synoptic board representative of the loads connected to the electric network, for the purpose of showing on the same the operating state of each one of the cited loads.

The load control unit has a voltage monitoring circuit and another intensity monitoring circuit which are connected to a failure condition memorizing cell, in which the results of the monitoring of the circuits connected to it are stored.

The load control unit has some microswitches in which the binary number that has been given to the unit is stored, and therefore the load assigned to it.

Besides, the load control unit has a line pulse detector circuit which in turn is connected to a descending meter, which is connected to the microswitches, in such a way that the load control unit detects in function to to the codification assigned to it when it is questioned.

Besides, the descending meter is connected to an overvoltage generating circuit by means of which the response signal is generated when the unit has been questioned.

The sector control unit has a microprocessor to control and operate the unit itself, which is connected to a driver circuit which in turn is connected to a pulse emitting circuit as of which question pulse are generated of the different load control units, all controlled by the microprocessor, the driver circuit communicating the state of each one of the variables to the microprocessor, which effects the processing of information received about the state of each one of the loads connected to the network and of the feed network itself, as well as of the protection and operation elements installed in the sector control unit.

On the other hand, the microprocessor is capable of being connected to a keyboard and to a display for communication with the operator-user. Likewise, the microprocessor is capable of being connected to an intelligent terminal for the tasks of supervision, maintenance and modification of programs by the technicians responsable for the installation.

The connection of the control unit of the sector is done from the microprocessor through a modulator-demodulator by means of which the transmission of information processed about the supervised loads is done.

It should be pointed out that the connection of the sector control unit with the central control unit is capable of being done by radio.

The central control unit has a communications unit by means of which the connection to the different sector control units is done. Besides, the central control unit has a management and storage of data regarding the entire controlled system computer, as well as the programs of maintenance and economic exploitation of the controlled units network, obtaining operating statistics of each one.

The central control unit also has an alarm and report printer for the written recording of data.

The connection of the sector control units to the different load control units is capable of being done through a persistent control line in the public lighting installations, line which reduces the consumption of the lighting at midnight.

In this last case as well as in the one in which the connection is done through the electric line, the data transfer is done when the lighting goes out, this is when there would be access, instant in which the line is not occupied whereby it is the right moment to establish the passing of information of the state of each one of the loads, in this case lamps that constitute the lighting network.

Therefore, by means of the invention there is no need for the use of dedicated outer feed, since it is fed through the power or control line itself, line in which afterwards the corresponding information is transmitted.

This feature prevents the production of electromagnetic interferences in nearby circuits, given that the information is transmitted when the power circuit has opened, situation which is detected by means of the above cited circuits.

By means of the invention the use of specific wiring for the installation thereof is avoided, upon using the feed or control line, which notably reduces the cost of the system.

On the grounds of the described structure, it is obvious that by means of the invention there is a savings in maintenance costs, along with a noteworthy improvement of the service quality, upon being able to effect repairs rapidly and precisely.

Hereinafter in order to provide a better understanding of this specification, forming an integral part of the same, a series of figures is attached in which with an illustrative and non-restrictive manner the object of the invention has been represented.

BRIEF DESCRIPTION OF THE FIGURES

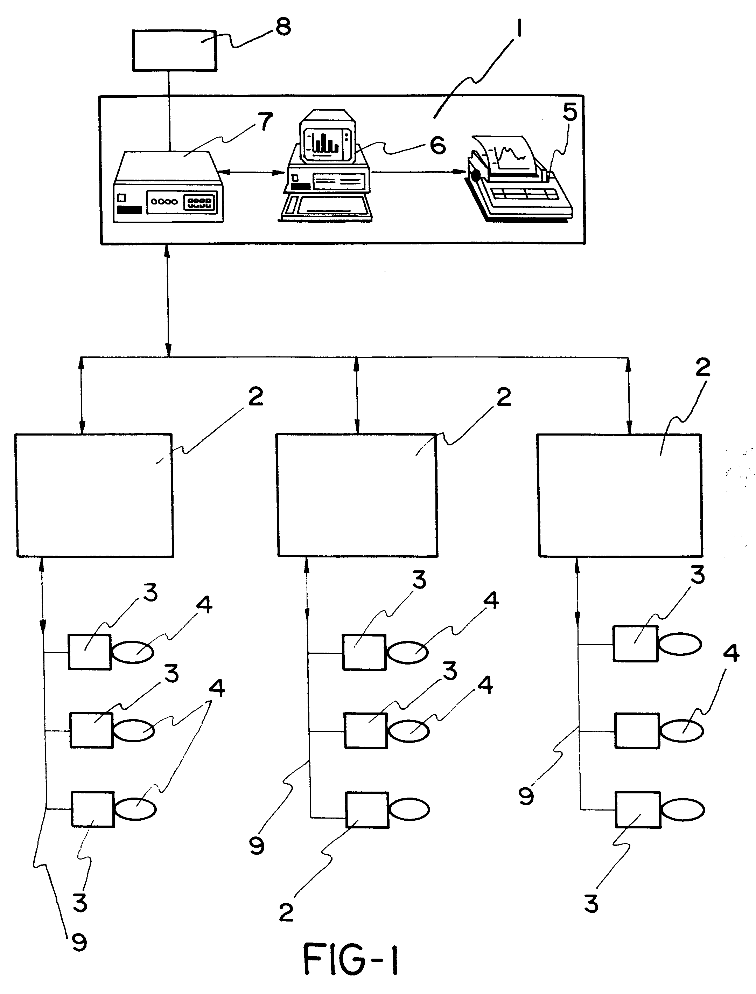

Figure 1.- It shows a block diagram of the system object of the invention.

Figure 2.- It shows a block diagram of the constitution of the sector control units, unit which forms part of the system of the invention.

Figure 3.- It shows a schematic diagram of the load control unit, the loads in this case being public lighting lamps. A plurality of load control units are connected to a sector control unit like the one shown in the above figure.

Figure 5.- It shows a schematic diagram of the connection of the sector control unit by means of the electric line to the load control unit.

Figure 6.- It shows a schematic diagram of the connection of the sector control unit to the load control unit through the control line, line used in public lighting networks to reduce the consumption of loads at midnight.

DESCRIPTION OF ONE OR SEVERAL
EMBODIMENTS OF THE INVENTION

Hereinafter a description is made of the invention based on the above cited figures.

The example of preferred embodiment consists of the use of the invention to supervise the state of a public lighting network.

The invention has a central operating control unit of the system, which is connected to a plurality of sector control units (2), which in turn, each one of them is connected through the electric feed line (9) of the load to a plurality of load control units (3), each one of which is connected to one of the loads to be supervised. In the example of embodiment the loads correspond to lamps.

The central control unit (1) is optionally applicable in a load state information system. Inclusion thereof corresponds to the specific need of the use, and to the degree of control that is to be obtained.

The central control unit (1) has a communications unit (7) by means of which the connection to the different sector control units (2) is done.

The communications unit (7) is connected to a management and storage of data regarding the entire controlled system computer, as well as programs of maintenance and economic exploitation of the controlled units network.

The computer (6) is connected to an alarm and report printer (5) for the written recording of the data obtained from the system.

The computer (6) is capable of being connected through the communicatoins unit (7) to a synoptic board which represents the installation on the whole, in other words, the different lamps that constitute the public lighting to be supervised, all in order to indicate on said board the state of each one of the lamps (4.)

The state of the cited lamps (4) is stored, just as will be explained further on in the load control unit (3) until it is questioned by the corresponding sector control unit (2), all by indication of the central control unit (1.) This questioning is done when the electric line (9) is open, in other words, when the lamps are turned off.

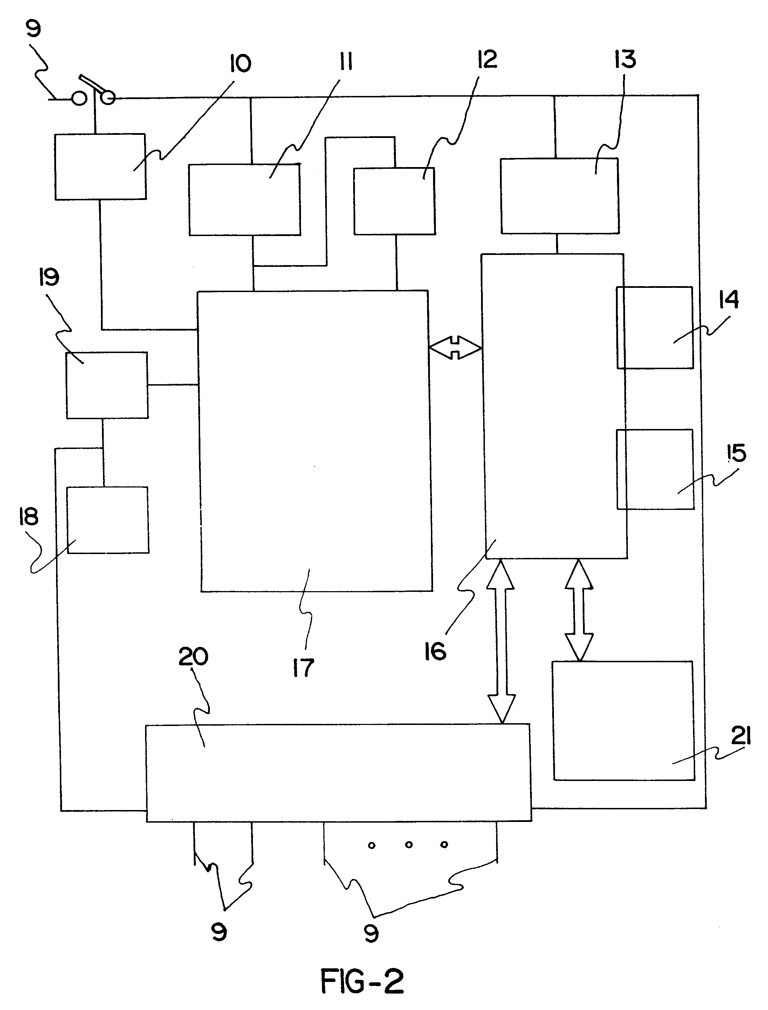

Hereinafter an explanation is made of the constitution and operation of the sector control unit (2) whose block diagram has been represented in figure 2.

Hence, the sector control unit (2) has a microprocessor (6) which is connected to a driver circuit (17) which in turn is connected to a general contactor (10), to a feed circuit (11) and to a relay control circuit (12) all in order to monitor the presence of alternating current in the line and to communicate the failures detected in the operation and protection elements: contactors, fuses, magnetothermal elements, etc.

The driver circuit (17) is connected to a pulse emitting circuit (19) which in turn is connected to a network discharge circuit (18), in such a way that upon detecting the absence of alternating voltage in the line emitting the order to discharge the network through the cited circuit (18.) If it detects the discharge of the condensers included in the public lighting network, condensers that would have remained loaded in the moment of the cut-off of the feed, in said instant the driver circuit (17) orders the emitting of questioning pulses to the network through the circuit (19.)

Besides, the drvier circuit (17) ensures the operations and interlockings of the line control elements to avoid dangerous situations for the components or three-phase lines.

The driver circuit (17) communicates the state of each one of the variables to the microprocessor (16), at the same time that it executes the orders coming from the microprocessor (16) or from some outer element, for the control of the opening and closing of the general contactor (10) of the monitored circuit.

As it has been shown above, the pulse emitting circuit (19) is responsible for generating the pulse train that sends the question to each one of the loads (4) connected through the load control units (3), the latter answering, just as it will be explained further on for the purpose of reporting the state of the cited load (4.)

The network discharge circuit (18) effects the compensation of the load stored in the condensers included in the network, since the loads (4) can be made up of motors, loud speakers, electronic apparatus, home appliances, etc., although in the example of embodiment the load consists of public lighting lamps.

By means of the relay control circuit (12) the interlocking of the different operations ordered by the driver circuit (17) is effected, at the same time that it carries out the functions of the relay coil voltage coupling circuit to the work voltage of the driver circuit (17.)

The microprocessor (16) is connected, also, to a feed circuit (13) by means of which the operating voltages of the microprocessor (16) are generated to a display (14) and to a keyboard (15) to establish direct communication with the operator-user.

The response of the state of the load (4) generated by the load control unit (3) is processed by the microprocessor (16) at the same time that it processes the information regarding the operation and protection elements installed in the sector control unit itself (2.)

The microprocessor (16) is capable of being connected to a way RS232 in order to effect the connection to a peripheral in which the printed recording of the formations processed about the supervised lines is effected.

On the other hand, the microprocessor (16) by way RS232 establishes communication with an intelligent terminal for the tasks of supervision, maintenance and modification of programs by the technicians responsible for the installation.

The microprocessor (16) includes the suitable memories to effect the storage of different automatic opening and closing control programs of the controlled networks by schedules, dates, conditioning factors, etc.

It should be pointed out that the microprocessor (16) establishes communication by modulator-demodulator (21) with the control unit (1) for the transmission of information processed about the monitored network and carrying out of orders coming from the central post. Said modulator-demodulator (21) is connected to the modulator-demodulator (7) of the central control unit (1) to effect the exchange of said information.

The sector control unit (2) has line monitoring circuits (20) which are connected to the microprocessor (16) and to the electric line (9), in such a way that by means of said line monitoring circuit (20) the connection of each one of the load control units is done by means of the electric feed network (9) of the load (4), in such a way that it detects the presence of voltage in each three-phase line between phase and neutral to determine failure or not of the protection fuses included in the different public lighting lines, at the same time that it detects the arrival of pulses coming from the load control units (3) of each load installed in the network.

Besides the line monitoring circuits (20) inform the microprocessor (16) of the incidences that take place in each moment.

The elements that make up the line monitoring circuits (20) basically consist of voltage and intensity detectors.

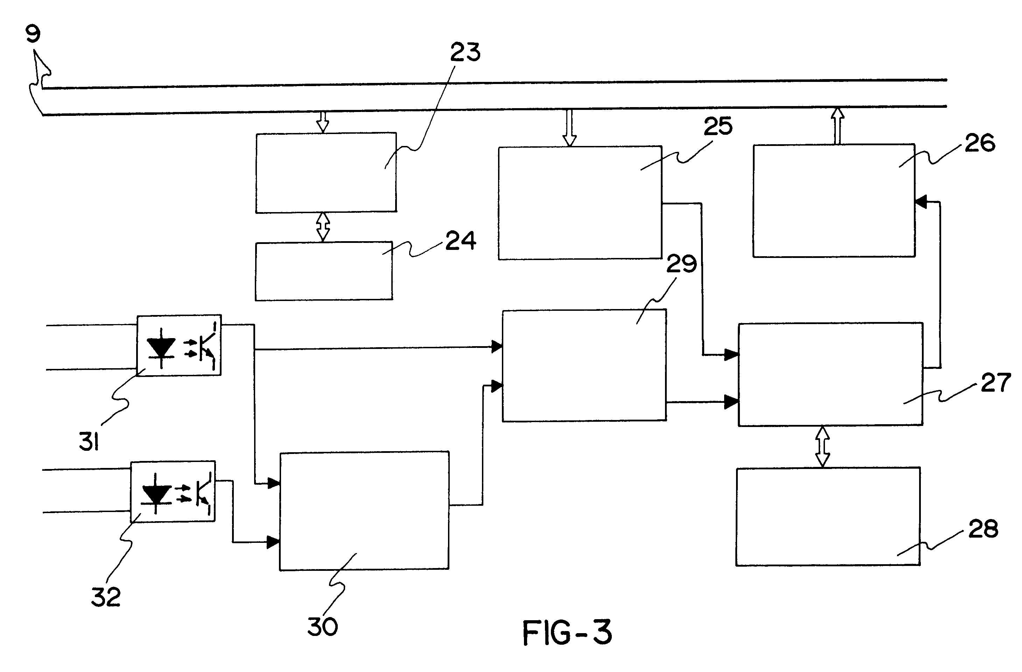

Hereinafter the constitution and operation of the load control units (3) is described, whose block diagram has been represented in figure 3.

Hence, the electric feed line (9) is connected to a feed source (23) which in turn is connected to an energy reserve circuit (24) so that by means of the feed source (23) energy is supplied to the unit while there is voltage in the network (9) so that the entrusted functions of monitoring and supervising the load are carried out.

On its part the energy reserve circuit stores enough energy so that when the network feed is disconnected the load control unit (3) can communicate with the sector control unit (2.)

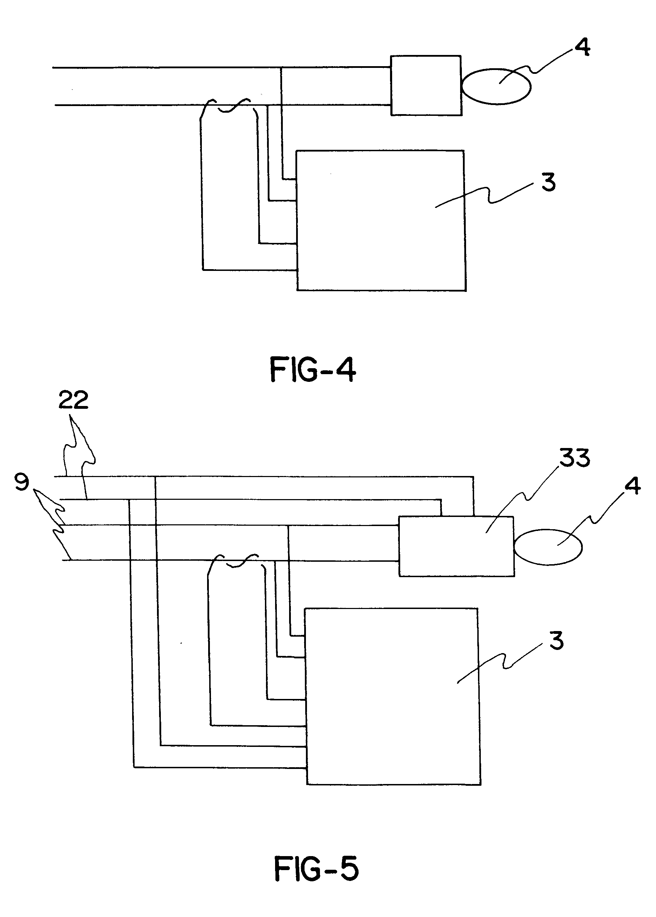

The electric energy line (9) is connected to a voltage monitoring circuit (31) and to an intensity monitoring circuit (34), said connection not being represented in the figure because said connection has been represented in figures 4 and 5. As of said circuits (31) and (32) the connection to the load or lamp (4) is done.

The voltage monitoring circuit examines the presence of alternating voltage in the network (9), this being the circuit that determines whether the feed to the network is 220 volts, is connected or not, and inhibits the operation of the rest of the communication circuits of the sector control unit (2.)

The intensity monitoring circuit is similar to the above one with the difference that its function is to monitor the consumption of the load (4) connected in the period of connectian to the network (9.)

The voltage monitoring (31) and intensity monitoring (32) circuits are connected to a failure condition memorizing cell (30) that stores the result of the monitoring of circuits (31) and (32), in such a way that if there is an intensity failure in the presence of voltage it emits an order of disconnected load at the right moment.

The failure condition memoring cell (30) is connected to a logical control circuit of the voltage monitoring circuit (31) at the same time it is connected to a descending meter (27) to effect the control of the same in terms of the signal obtained from the voltage monitoring circuit (31) and from the intensity monitoring circuit (32.)

The descending meter (27) is connected to some microswitches (28) and to a pulse detector circuit (25) which in turn is connected to the electric feed line (9) in such a way that by means of the pulse detector circuit (25), consisting of several filters, certain pulses are allowed to pass in the network which mean that the network is being questioned and transmitting information, pulses which pass to the descending meter which controls the number of pulses sent by the sector control unit (2) in such a way that if they coincide with the number of the unit itself included in the microswitches (28) it causes an order of generation of response pulses that is sent to an overcurrent generating circuit (26) by means of which the response of the state of the lamps (4) is generated.

As it has been indicated above, the communication between the sector control unit (2) and the load control unit (3) is done when the public lighting has been disconnected, in other words, when there is no feed in the network, instant as of which the above cited codified pulses are sent, knowing the load control unit (3) as of the voltage monitoring circuit (31) when the electric lighting has gone off, and therefore of the lamp (4) assigned to it.

The connection of the load control unit (3) to the lamp (4) is done just as it has been represented in figures 4 and 5.

Thus, in figure 4 the connection by means of the electric feed line of the cited lamp is represented, while figure 5 shows the connection through the control line (22), line which is known to be included in some electric line networks for the purpose of reducing the flow at midnight, for which purpose the lamp (4) is connected to the control line through a flow reduction circuit (33) upon which the signal sent through the control line (22) acts.

As it has been indicated above, the descending meter (27) is connected to an overcurrent generating circuit (26) device which acts when it receives the order from the descending meter (27), emitting a signal that indicates that the load has not been connected during the feed period. This signal is picked up by the line monitoring circuits (20) placed in the sector control unit (2), just as it has been indicated above.

In the event that the control line (22) is used to effect the transmission of information of the sector control unit (2) to the load control unit (3), more rapid communication is obtained than in the event that the electric feed line itself (9) is used, since in the last case the power factor correction condensers of the lamps (4) remain permanently connected, which causes relatively high time constants to the voltage level changes, therefore, the transmissions must be slower.

As it has already been shown, the information sent to the sector control unit (2) can be processed directly by it itself indicating the particularities of each one of the loads (4), and at the same time emitting said information to the central control unit (1) which shows the situation of each one of the lamps that make up the lighting network through the synoptic board (8) explained above.

On the basis of the description made, the invention provides a savings in maintenance costs, along with a noteworthy improvement in the quality of service, upon being able to effect repairs rapidly and precisely.

Besides, by means of the invention preventive maintenance becomes possible, since it improves the knowledge of the state of the network upon obtaining statistics of breakdowns of lamps, failures in sector control boards, consumption control, average useful life, statistics on components duration, etc.

Another important feature of the invention is that it enables the possibility of implanting automatized and centralized management of lighting up and going out of lighting sectors, as well as checking electric energy bills billed by the electric energy distribution company.

**Claims**

1.- Information transmission system of the state of loads connected to an electric line, whose purpose is to supervise and demonstrate the state of a plurality of loads (4) connected to an electric line, such as for example, public lighting line lamps, electronic apparatus and the like; for which it is essentially characterized because it has a central operating control unit (1) of the system that is connected to a plurality of sector control units (2) which in turn each one of which is connected, through the electric feed line (9) of the load (4) to a plurality of load control units (3), each one of which is connected to one of the loads (4) to be supervised, detecting and storing the possible load operating failures; failures that are transmitted, through the electric feed line itself (9) to the corresponding sector control unit (2), where there is no feed, and from the latter to the central control unit (1); with the particularity that the central control unit (1) is capable of being connected to a synoptic board (8) representative of the loads (4) connected to the electric feed line (9), to demonstrate the operating state of each one of the loads (4.)

2.- Information transmission system of the state of loads connected to an electric line, according to claim 1, characterized because the sector control unit (2) is capable of being connected to the load control units (3) through the control line (22) existing in some public lighting installations to reduce the consumption at midnight; transmitting all the information among them by the cited control line (22.)

3.- Information transmission system of the state of loads connected to an electric line, according to claim 1, characterized because the sector control unit (2) has a microprocessor (16) that is connected to a driver circuit (17), which is connected to a pulse emitting circuit (19) which in turn is connected to line monitoring circuits (20) by means of which the connection to the load control unit (3) is done through the electric feed line (9); said line monitoring circuits (20) being connected to the microprocessor (16); all in order to generate a questioning pulse train of each one of the loads (4), and to receive the information coming from said loads (4), processing said information in the microprocessor (16); as well as to detect the presence of alternating current in the line and communicate the failures detected in the protection and operation elements.

4.- Information transmission system of the state of loads connected to an electric line, according to claim 3, characterized because the microprocessor (16) is connected to a modulator-demodulator circuit (21) by means of which the connection to the central control unit (1) is done through a modulator-demodulator circuit (7) included in the unit itself (1); it being provided that the connection to the sector control unit (2) with the central control unit (1) is capable of being done by radio.

5.- Information transmission system of the state of loads connected to an electric line, according to the above claims, characterized because the load control unit (3) has a voltage monitoring circuit (31) and a monitoring circuit (32) by means of which the connection to the electric feed line (9) and to the load itself (4) is done, both circuits being connected to a failure condition memorizing cell (30) which in turn is connected to a logical control circuit (29); in order to detect the presence of alternating voltage in the electric feed line (9) and the intensity consumption, generating a signal indicating failure in the load and absence of voltage in the electric feed line (9); it being provided that the load control unit (3) also has, a pulse detector meter (27) that in turn is connected to the logical control circuit (29) and to some microswitches (28) fastening the code assigned to the unit; all in order to detect when the load control unit (3) is being questioned from the sector control unit (2); and with the particularity that the descending meter circuit is connected to an overcurrent generating circuit (26) which is connected to the electric feed line (9) in order to generate a signal indicating the state of the load (4) connected to the load control unit itself (3.)

FIG-I

FIG-2

EP 0 470 034 A2

FIG-3

FIG-4

FIG-5